# EUROPÄISCHE PATENTANMELDUNG

(11) **EP 1 529 939 A1**
(43) Veröffentlichungstag der Anmeldung: **11.05.2005**
(21) Anmeldenummer: 03104136.1
(22) Anmeldetag: 10.11.2003
(51) Int. Cl.: F02B 31/08, F02M 35/108

(54) **Einlasssystem für eine Brennkraftmaschine**

(71) Anmelder: Ford Global Technologies, LLC, A subsidary of Ford Motor Company, Dearborn, MI 48126 (US)
(72) Erfinder: van den Heuvel, Sebastiaan Lambertus, 6363 BG, Wijnandsrade (NL)
(74) Vertreter: Drömer, Hans-Carsten, Dr.-Ing.

(57) **Zusammenfassung**

Die Erfindung betrifft ein Einlaßsystem für eine Brennkraftmaschine, welches einen Einlaßkanal (1) für die Zufuhr von Verbrennungsluft und ein Ventil (2) für die Regelung der Luftzufuhr in den Zylinder enthält. Weiterhin weist das System einen Steuerkanal (4) auf, über den durch eine Drosselklappe (5) gesteuert ein zusätzlicher Gasfluß in den Einlaßkanal (1) geführt werden kann. Durch den zusätzlichen Gasfluß kann auf die Strömung im Einlaßkanal (1) und damit die Intensität der Gemischbildung Einfluß genommen werden, ohne daß der Querschnitt des Einlaßkanals (1) verändert werden muß.

## Beschreibung

Die Erfindung betrifft ein Einlaßsystem für eine Brennkraftmaschine, enthaltend
a) einen Einlaßkanal für die Zufuhr von Verbrennungsluft zu einem Zylinder der Brennkraftmaschine;
b) ein am stromabwärtigen Ende des Einlaßkanals gelegenes Ventil.

Ferner betrifft die Erfindung ein Verfahren zur Steuerung der Gemischbildung im Zylinder einer Brennkraftmaschine durch Beeinflussung des Strömungsverhaltens der in den Zylinder eingeleiteten Verbrennungsluft.

In vielen Brennkraftmaschinen wie insbesondere Diesel- oder Ottomotoren wird eine Ladungsbewegung in den Zylindern eingesetzt, um die Vermischung von Luft und Kraftstoff zu fördern. Die Ladungsbewegung besteht dabei üblicherweise aus Wirbelbewegungen (swirl) und/oder Taumelbewegungen (tumble). Je nach Motorbelastung kann die erforderliche Intensität der Ladungsbewegung variieren. Aus diesem Grunde sind Einlaßsysteme entwickelt worden, die eine lastabhängige Anpassung der induzierten Ladungsbewegung erlauben. Diese Systeme beruhen dabei auf einer teilweisen Blockierung des Flusses durch einen oder mehrere Einlaßkanäle, welche zu einer höheren Intensität der induzierten Ladungsbewegung führt. Nachteilig ist dabei allerdings, daß aufgrund des reduzierten effektiven Querschnittes für den Strömungsfluß eine Minderung der volumetrischen Effizienz der Brennkraftmaschine eintritt. Außerdem vermindert sich auch die maximal erreichbare volumetrische Effizienz, die ohne jegliche Blockierung erzielt wird, da die Einlaßkanäle nicht für eine einzige Betriebsart optimiert werden können.

Des Weiteren erfordern die vorstehend genannten Systeme typischerweise mindestens zwei Einlaßventile, von denen eines wahlweise deaktiviert werden kann, um eine verstärkte Strömung und damit Ladungsbewegung durch das verbleibende Ventil zu erzwingen. Das verbleibende Ventil wird daher üblicherweise so ausgelegt, daß es in hohem Ausmaße Wirbel und Taumelbewegungen erzeugt, während dies für den deaktivierbaren Einlaß nicht der Fall ist. Bei Öffnung beider Einlaßventile ist die erzeugte Ladungsbewegung im Zylinder gering beziehungsweise nur mittelmäßig. Problematisch bei derartigen Konstruktionen ist, daß für die mehreren Einlaßventile verhältnismäßig viel Platz im beengten Raum des Zylinderkopfes benötigt wird. In diesem Zusammenhang ist es aus der US 49 57 073 bekannt, ein Einlaßventil und ein Auslaßventil in einer ineinandergeschachtelten Konstruktion anzuordnen, um sie auf engem Raum unterbringen zu können. Eine Einflußmöglichkeit auf die Ladungsbewegung im Zylinder bietet dies jedoch nicht.

Vor diesem Hintergrund war es Aufgabe der vorliegenden Erfindung, Mittel zur steuerbaren Variation der Ladungsbewegung in einem Zylinder bereitzustellen, durch welche die Effizienz des Motorsystems nicht oder nur minimal beeinträchtigt wird.

Diese Aufgabe wird durch ein Einlaßsystem mit dem Merkmalen des Anspruchs 1 sowie durch ein Verfahren mit den Merkmalen des Anspruchs 10 gelöst. Vorteilhafte Ausgestaltungen sind in den Unteransprüchen enthalten.

Das erfindungsgemäße Einlaßsystem für eine Brennkraftmaschine enthält die folgenden Komponenten:
a) Mindestens einen Einlaßkanal für die Zufuhr von Verbrennungsluft zu einem Zylinder der Brennkraftmaschine. Unter "Verbrennungsluft" soll dabei allgemein das zur Unterhaltung der Verbrennung im Zylinder zugeführte Gas verstanden werden. Dieses enthält in der Regel Frischluft, kann darüber hinaus jedoch auch rückgeführte Abgase und/oder in den Einlaßkanal eingespritzten Kraftstoff enthalten.
b) Ein am stromabwärtigen Ende des vorstehend genannten Einlaßkanals gelegenes Ventil, mit welchem in bekannter Weise die Zufuhr von Verbrennungsluft zum Zylinder in Abhängigkeit vom Motortakt gesteuert werden kann.
c) Einen Steuerkanal, welcher stromaufwärts des vorstehend genannten Ventils in den Einlaßkanal mündet, und welcher Mittel zur Steuerung des (Gas-) Durchflusses durch den Steuerkanal aufweist.

Bei dem beschriebenem Einlaßsystem kann die Strömung eines Gases, zum Beispiel eines Teils der Verbrennungsluft, durch den Steuerkanal geleitet und mit Hilfe der genannten Mittel reguliert werden. Da der Steuerkanal in den Einlaßkanal mündet, wirkt sich die Intensität einer aus dem Steuerkanal kommenden Strömung auf die Strömungsbewegung im Einlaßkanal aus. Hierdurch kann auf die Strömung im Einlaßkanal und somit auch auf die resultierende Ladungsbewegung im Zylinder Einfluß genommen werden, ohne daß eine Veränderung des Querschnittes des Einlaßkanals erforderlich wäre. Das heißt, daß ohne Beeinträchtigung der volumetrischen Effizienz des Motors die Ladungsbewegung im Zylinder lastabhängig gesteuert werden kann.

Vorzugsweise mündet der Steuerkanal bei dem Einlaßsystem so in den Einlaßkanal, daß eine aus dem Steuerkanal kommende Strömung die im Einlaßkanal strömende Verbrennungsluft von der Wand des Einlaßkanals trennt, oder eine abgelöste Strömung an die Wand anlegt. Die aus dem Steuerkanal austretende Strömung wirkt sich somit effektiv wie eine Veränderung der Geometrie des Einlaßkanals aus, ohne daß jedoch eine Verengung des Strömungsquerschnitts stattfindet.

Die Mittel zur Steuerung des Durchflusses im Strömungskanal können auf unterschiedliche Weise ausgebildet werden. Insbesondere kann es sich hierbei um eine Drosselklappe handeln, durch deren Einstellung der Gasfluß zwischen einem Maximum und einem Minimum (in der Regel einer vollständigen Öffnung bzw. einem vollständigen Verschluß des Steuerkanals) variiert werden kann.

Gemäß einer Weiterbildung des Einlaßsystems enthält dieses mehrere Einlaßkanäle, wobei die Einlaßkanäle zu demselben Zylinder oder zu verschiedenen Zylindem der Brennkraftmaschine führen können. Weiterhin soll pro Zylinder in wenigstens einem der genannten Einlaßkanäle in der oben beschriebenen Weise ein Steuerkanal münden. Diese mehreren Steuerkanäle können im Prinzip alle separat versorgt und hinsichtlich des Durchflusses geregelt werden. Optional sind die Steuerkanäle jedoch stromaufwärts an einen gemeinsamen Zufuhrkanal angeschlossen, so daß sie aus einer einzigen Quelle für den Gasfluß gespeist werden können. Weiterhin kann bei einer derartigen Anordnung ein Regelventil im Zufuhrkanal vorhanden sein, welches die Strömung für alle Steuerkanäle gleichzeitig kontrolliert. Die Steuerkanäle können im Zylinderkopf der Brennkraftmaschine ausgebildet oder über einen eigenen Krümmer außerhalb des Zylinderkopfes angeschlossen sein.

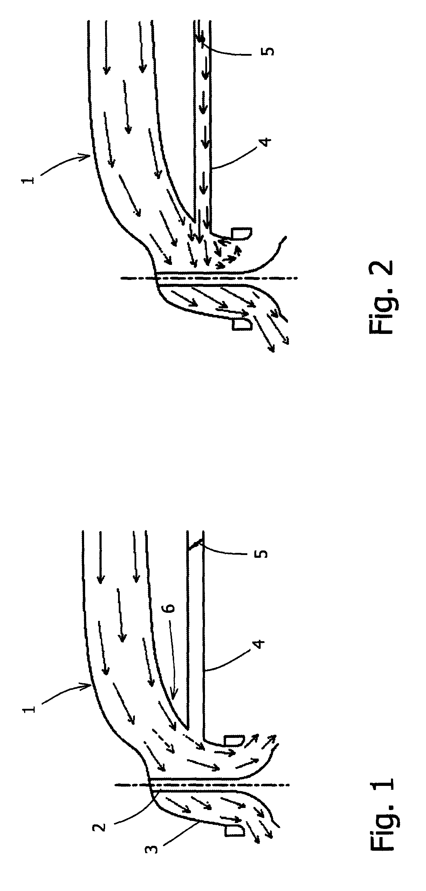

Gemäß einer Weiterbildung des Einlaßsystems ist das stromabwärtige Ende des Einlaßkanals als eine Kammer ausgebildet, welche den Schaft des Ventils ringförmig umgibt, wobei der Einlaßkanal in der Ebene des Schaftes gesehen (vgl. Figuren 1, 2) am Eingang in die Kammer einen Knick aufweist. Bei einer derartigen Konstruktion des Einlaßkanals mündet der Steuerkanal vorzugsweise im Bereich des genannten Knicks in die Kammer ein. Die geometrische Auslegung des Knickes bestimmt ob und wenn ja, bei welcher Strömungsgeschwindigkeit sich die durch den Einlaßkanal strömende Verbrennungsluft von der Wand ablöst, und damit für eine bestimmte Intensität der Ladungsbewegung im Zylinder sorgt.

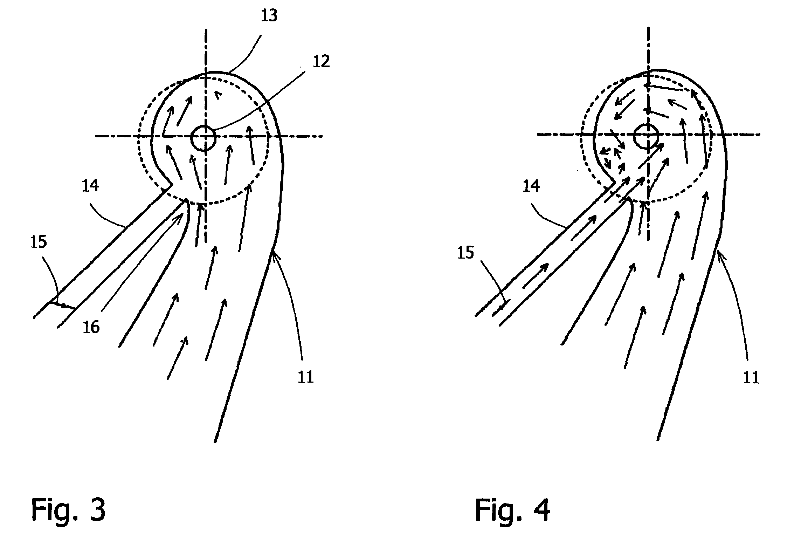

Gemäß einer anderen Ausführungsform des Einlaßsystems ist das stromabwärtige Ende des Einlaßkanals ebenfalls als eine Kammer ausgebildet, welche den Ventilschaft ringförmig umgibt, wobei der Einlaßkanal in einer Ebene senkrecht zum Ventilschaft gesehen (Figuren 3, 4) schräg in die Kammer einmündet, d. h. nicht auf einem Radiusstrahl in Bezug auf die Kammermittelachse bzw. Achse des Stößels. Die Mündung des Steuerkanals bildet daher mit der Wand der Kammer auf einer Seite einen spitzen und auf der anderen Seite einen stumpfen Winkel. Durch die schräge Einmündung des Einlaßkanals in die Kammer und mehr noch durch die geometrische Auslegung der Spritze wird eine Rotation der Verbrennungsluft erzeugt, die zu einer gewünschten Ladungsbewegung im Zylinder führt.

Gemäß einer bevorzugten Ausgestaltung der vorstehend erläuterten Ausführungsform mündet der Steuerkanal in der Nähe der Spitze bzw. des spitzen Winkels der Mündung des Einlaßkanals in die genannte Kammer. Die Form und Dimensionierung der Spitze hat erheblichen Einfluß auf das Ausmaß der in der Verbrennungsluft erzeugten Rotation und damit die Intensität der Gemischbildung. Durch eine Mündung des Steuerkanals im Bereich des spitzen Winkels kann daher durch eine Strömung aus dem Steuerkanal Einfluß auf die effektive Form der Spitze und damit auf die Intensität der Wirbelbildung der Verbrennungsluft genommen werden.

Die Erfindung betrifft ferner ein Verfahren zur Steuerung der Gemischbildung im Zylinder einer Brennkraftmaschine durch Beeinflussung des Strömungsverhaltens der in den Zylinder eintretenden Verbrennungsluft. Das Verfahren ist dadurch gekennzeichnet, daß vor Eintritt der Verbrennungsluft in den Zylinder eine Steuerungsströmung in die Verbrennungsluft eingeleitet wird. Das Verfahren hat den Vorteil, daß im Einlaßkanal keine Einrichtungen vorgesehen werden müssen, die die Geometrie des Kanals verändern und hierdurch insbesondere zu einer Querschnittsverengung führen. Eine Beeinflussung der Strömungsverhältnisse im Einlaßkanal und damit der Gemischbildung wird vielmehr rein strömungstechnisch durch einen Steuerungs(gas)strom erreicht, welcher noch im Bereich des Einlaßkanals zugeführt wird. Das Verfahren läßt sich insbesondere in einem Einlaßsystem der oben erläuterten Art ausführen. Daher kann für eine Erläuterung der Einzelheiten, Vorteile und Weiterbildungen des Verfahrens auf die obige Beschreibung verwiesen werden.

Im Folgenden wird die Erfindung mit Hilfe der Figuren beispielhaft näher erläutert. Es zeigen:
- Fig. 1: eine Seitenansicht eines erfindungsgemäßen Einlaßsystems mit gerichtetem Einlaßkanal bei geschlossenem Steuerkanal;
- Fig. 2: das Einlaßsystem von Figur 1 bei geöffnetem Steuerkanal;
- Fig. 3: eine Aufsicht auf eine zweite Ausführungsform des erfindungsgemäßen Einlaßsystems mit spiralförmigem Einlaßkanal bei geschlossenem Steuerkanal, und
- Fig. 4: das Einlaßsystem von Figur 3 bei geöffnetem Steuerkanal.

Einlaßkanäle von Brennkraftmaschinen sind in der Regel so konstruiert, daß sie eine bestimmte Luftbewegung, typischerweise eine Wirbel- oder Taumelbewegung, erzeugen, um hierdurch die Intensität der Vermischung von Luft und Kraftstoff und damit den Verbrennungsprozeß zu beeinflussen. Dabei gibt es zwei wichtige Grundtypen von Einlaßkanälen, den "gerichteten Einlaßkanal" ("directed port", Figuren 1 und 2) und den "spiralförmigen Einlaßkanal" ("helical port", Figuren 3 und 4), mit denen Wirbel oder Taumelbewegungen in der Brennkammer induziert werden können.

Die Figuren 1 und 2 zeigen in einer schematischen Schnittansicht ein erfindungsgemäß erweitertes Einlaßsystem mit einem "gerichteten Einlaßkanal". Der Einlaßkanal 1 ist stromaufwärts an einen nicht näher dargestellten Ansaugkrümmer zur Frischluftzufuhr angeschlossen. Im stromabwärtigen Endbereich enthält der Einlaßkanal 1 eine Kammer 3, welche den Schaft eines Tellerventils 2 ringförmig umgibt. Das Ventil 2 wird in bekannter Weise (zum Beispiel von einer Nockenwelle) gesteuert, um die Zufuhr von Verbrennungsluft zum Zylinder der Brennkraftmaschine gemäß dem Motortakt zu steuern. In den Figuren ist das Ventil 2 dabei in der nach unten gedrückten, offenen Stellung dargestellt.

Der Übergang vom oberen Teil des Einlaßkanals 1 in die Kammer 3 ist an den oberen und seitlichen Wänden glatt. Die untere Wand des Einlaßkanals 1 geht jedoch in einem mehr oder weniger starken Knick 6 (sogenanntes "Knie") in die Kammer 3 über. Der Radius dieses Knickes 6 ist ein wichtiger konstruktiver Parameter, welcher das Ausmaß der in der Verbrennungsluft erzeugten Wirbel beziehungsweise Taumelbewegungen bestimmt. Ein kleiner Radius beziehungsweise ein scharfer Knick führt dazu, daß sich die Strömung der Verbrennungsluft von der Wandung des Knies trennt. Der größte Anteil des Gases wird hierdurch aufgrund von Strömungseffekten dazu gezwungen, den Einlaßkanal an der gegenüberliegenden Seite zu verlassen, so daß die Verbrennungsluft als gerichteter Strahl in den Zylinder der Brennkraftmaschine eintritt. Die Wechselwirkung des gerichteten Strahles mit der Geometrie der Brennkammer führt dann nachfolgend zu einer wirbelnden oder taumelnden Ladungsbewegung. Ein großer Radius des Knies 6 führt hingegen zu einem glatten Übergang vom stromaufwärtigen Teil des Einlaßkanals 1 zur Kammer 3. Eine Abtrennung des Flusses von der Wandung tritt nicht beziehungsweise nur bei hohen Strömungsgeschwindigkeiten auf. Dementsprechend ist die Verteilung der in den Zylinder eintretenden Strömung gleichmäßiger, was zu einer geringeren Wirbel- beziehungsweise Taumelbewegung führt. Dieser Fall entspricht der in Figur 1 dargestellten Situation.

Um die Intensität der Gemischbildung in Abhängigkeit von der Motorlast beeinflussen zu können, sind Einlaßsysteme mit mehreren Einlaßventilen pro Zylinder entwickelt worden. Hierbei kann durch selektives Schließen eines der Ventile Einfluß auf die Strömung im Zylinder und damit die Gemischbildung genommen werden. Hieran ist jedoch nachteilig, daß der Strömungsquerschnitt des Einlaßkanals verändert und damit die volumetrische Effizienz des Motors beeinträchtigt wird.

Zur Strömungssteuerung in Einlaßsystemen mit einem Einlaßventil pro Zylinder ist es darüber hinaus bekannt, durch Komponenten wie Steuerklappen im Einlaßkanal eine Veränderung der Strömung der Verbrennungsluft zu bewirken. Auch bei diesen Systemen ist jedoch neben dem konstruktivem Aufwand die Querschnittsveränderung des Einlaßkanals nachteilig.

Um ausgehend von dieser Situation eine Steuerung der Strömung der Verbrennungsluft und damit der Gemischbildung ohne die beschriebenen Nachteile zu erreichen, wird das in den Figuren 1 und 2 dargestellte Design vorgeschlagen, bei dem ein zusätzlicher Steuerkanal 4 für die Zufuhr eines Gases in den Einlaßkanal 1 vorgesehen ist. Bei dem im Steuerkanal 1 fließenden Gas kann es sich zum Beispiel um Verbrennungsluft ähnlich derjenigen im Einlaßkanal 1 handeln. Durch eine steuerbare Drosselklappe 5 im Steuerkanal 4 kann das Ausmaß der Gasströmung durch den Steuerkanal 4 geregelt und insbesondere zwischen dem Minimum einer vollständigen Unterbrechung (Figur 1) und dem Maximum einer vollständigen Öffnung (Figur 2) variiert werden.

Der Steuerkanal 4 mündet unterhalb des Knickes 6 in den Einlaßkanal 1. Die effektive Schärfe des Knickes kann nun durch einen Strömungsaustritt aus dem Steuerkanal 4 beeinflußt werden. So kann z. B. bei vollständiger Unterbrechung des Gasflusses gemäß Figur 1 ein glatter Strömungsfluß im Einlaßkanal 1, d. h. eine minimale Wirbel- und Taumelbewegung im Zylinder, erzeugt werden. Findet dagegen wie bei Figur 2 gezeigt ein Gasaustritt aus dem Steuerkanal 4 statt, so stört dies den Strömungsfluß durch den Einlaßkanal 1 aufgrund der unterschiedlichen Flußrichtung. Ähnlich der Wirkung eines Knickes 6 mit kleinem Radius wird dadurch der hauptsächliche Fluß abgelenkt und von der Wandung getrennt, so daß er unter einer bevorzugten Richtung in den Zylinder eintritt. Die Verteilung des radialen Flusses durch das Einlaßventil 2 wird hierdurch ungleichmäßiger, und es bildet sich ein Strahl, welcher mit einer entsprechend konstruierten Verbrennungskammer zusammenwirkt, um eine Wirbel- oder Taumelbewegung der Ladung zu erzeugen.

Während des Betriebs der Brennkraftmaschine kann somit die Erzeugung von Wirbeln oder Taumelbewegungen zwischen Null (Figur 1) und einem bestimmtem Maximum (Figur 2) durch Veränderung der Einstellung der Drosselklappe 5 im Steuerkanal 4 reguliert werden. Die Wirkung des Steuerkanals 4 hängt dabei hauptsächlich von seinem Design, seinem Mündungsort, seinem Mündungswinkel relativ zur lokalen Wand des Einlaßkanals 1, seinem Querschnitt, und dem Design des Einlaßkanals 1 ab.

Anstelle der in den Figuren dargestellten Drosselklappe 5 könnte prinzipiell jedes geeignete Regelventil verwendet werden. Dabei kann wie dargestellt in jedem vorhandenen Steuerkanal zu einem Einlaßventil der Zylinder eine eigene Drosselklappe 5 vorgesehen sein. Alternativ könnte auch eine einzige Drosselklappe eingesetzt werden, wenn eine Konstruktion vorliegt, bei der alle Steuerkanäle 4 von einem gemeinsamen Zufuhrkanal ausgehen (nicht dargestellt). Die Steuerkanäle können dabei innerhalb des Zylinderkopfes oder durch einen eigenen Krümmer zusammengeführt werden.

Bei der vorgeschlagenen Konstruktion werden nicht mehrere Einlaßventile pro Zylinder zur Regulierung der Gemischbildung benötigt, so daß das Prinzip auch bei Brennkraftmaschinen mit einem Einlaßventil pro Zylinder anwendbar ist. Falls mehrere Einlaßventile pro Zylinder vorgesehen sind, kann ein Steuerkanal an nur einem oder an mehreren (zum Beispiel allen) hiervon vorgesehen werden. Ein wichtiger Vorteil gegenüber herkömmlichen Verfahren der Deaktivierung von Einlässen besteht dabei darin, daß Haupteinlässe zusammengeführt werden können. Im Vergleich zu mehreren separaten Einlaßkanälen bietet dies Vorteile hinsichtlich der Einfachheit beim Gießen, der Gießgenauigkeit, der geringen Flußverluste aufgrund einer geringeren Wandreibung, einfacher Krümmeröffnungen für jeden Zylinder und einer verbesserten Packungsdichte aufgrund verminderter Platzanforderungen. Die sekundären Einlässe können entweder ähnlich den Haupteinlässen gegossen oder in den Zylinderkopf eingearbeitet werden.

Weiterhin besteht ein wichtiger Vorteil des beschriebenen Einlaßsystems darin, daß hierbei keine Verluste hinsichtlich der Strömungskapazität eintreten, da keine Verminderung der effektiven Querschnitte stattfindet. Die maximal erzielbare Flußkapazität für einen Betrieb mit geringer Wirbel- oder Taumelbewegung (Sekundärkanäle geschlossen) kann sogar höher als bei herkömmlichen Systemen sein, da die primären Einlässe im Wesentlichen für diese Betriebsart optimiert werden können. Eine ungleiche Verteilung der Kapazität zur Erzeugung von Wirbeln oder Taumelbewegungen zwischen den beiden Einlaßkanälen, wie sie bei herkömmlichen Konzepten der Einlaßdeaktivierung nötig ist, ist vorliegend nicht erforderlich.

Das beschriebene Konzept kann auch für Einlaßkanäle vom spiralförmigen Typ gemäß den Figuren 3 und 4 oder für Mischtypen von Einlaßkanälen gemäß den Figuren 1 bis 4 eingesetzt werden.

In den Figuren 3 und 4 ist ein Einlaßkanal 11 vom spiralförmigen Typ in einem Schnitt senkrecht zum Schaft des Ventils 12 schematisch dargestellt. Auch hier ist der Endbereich des Einlaßkanals 11 als Kammer 13 ausgebildet, deren Rille in einem ringförmigen Ventilsitz endet. Die Kammer 13 wird durch einen ringförmigen Raum definiert, welcher um den Ventilschaft herum eine Wirbelbewegung der Einlaßgase bei ihrem Eintritt in den Zylinder erzeugt.

Die Verbindung zwischen dem stromaufwärtigen Teil des Einlaßkanals 11 und der Kammer 13 ist an der äußeren (in den Figuren rechten) Wandung des Einlaßkanals glatt, während sie an der gegenüberliegenden inneren Wand eine Spitze 16 bzw. einen spitzen Winkel aufweist. Üblicherweise hat eine derartige Spitze 16 eine Kante oder Lippe. Das Ausmaß der Wirbelbewegung hängt dann von den speziellen Formen der Wände im Einlaßsystem ab. Insbesondere ist der Radius der Lippe ein wichtiger geometrischer Parameter. Eine scharfe Lippe bewirkt, daß sich der Fluß der Verbrennungsluft von der inneren Wand trennt und mehr auf einer Seite des Ventilstößels fließt, um einen höheren Grad an Wirbelbewegung in Kammer 13 zu erzeugen. Ein größerer Lippenradius erzeugt dagegen eine geringere Wirbelbewegung.

Der Einlaßkanal 11 vom spiralförmigen Typ wird vorliegend um einen Steuerkanal 14 erweitert. Der Steuerkanal 14 dient wiederum der Zufuhr eines zusätzlichen Gasflusses, wobei dieser Fluß durch eine Drosselklappe 15 im Steuerkanal 14 zwischen einem Minimum (vollständig geschlossen, Figur 3) und einem Maximum (vollständig offen, Figur 4) verändert werden kann. Vorzugsweise mündet der Steuerkanal 14 in der Nähe der Spitze 16, die an der Verbindung zwischen stromaufwärtigem Teil des Einlaßkanals 11 und der Kammer 13 liegt. Der aus dem Steuerkanal 14 austretende Gasfluß führt dann zu einer Trennung der Verbrennungsluft von der Kanalwand, so daß dieser Hauptfluß abgelenkt wird und den Ventilstößel hauptsächlich auf einer Seite passiert (Figur 4). Dadurch wird in der Kammer 13 ein spiralförmiger Gasfluß erzeugt, welcher unmittelbar in die Brennkammer des Zylinders eingeleitet wird.

## Patentansprüche

1. Einlaßsystem für eine Brennkraftmaschine, enthaltend
a) einen Einlaßkanal (1, 11) für die Zufuhr von Verbrennungsluft zu einem Zylinder der Brennkraftmaschine;
b) ein am stromabwärtigen Ende (3, 13) des Einlaßkanals (1, 11) gelegenes Ventil (2, 12);
**gekennzeichnet durch**
c) einen Steuerkanal (4, 14), welcher stromaufwärts des Ventils (2, 12) in den Einlaßkanal (1, 11) mündet und Mittel (5, 15) zur Steuerung seines Durchflusses aufweist.

2. Einlaßsystem nach Anspruch 1,
**dadurch gekennzeichnet, daß**
der Steuerkanal (4, 14) so in den Einlaßkanal (1, 11) mündet, daß eine Strömung aus dem Steuerkanal (4, 14) die Strömung der Verbrennungsluft im Einlaßkanal (1, 11) von der Wand des Einlaßkanals (1, 11) trennt oder eine abgelöste Strömung an die Wand anlegt.

3. Einlaßsystem nach Anspruch 1 oder 2,
**dadurch gekennzeichnet, daß**
die Mittel zur Steuerung des Durchflusses im Steuerkanal (4, 14) eine Drosselklappe (5, 15) enthalten.

4. Einlaßsystem nach mindestens einem der Ansprüche 1 bis 3,
**dadurch gekennzeichnet, daß**
mehrere Steuerkanäle (4, 14) für verschiedene Einlaßkanäle (1, 11) vorgesehen sind, wobei die Steuerkanäle stromaufwärts an einen gemeinsamen Zufuhrkanal angeschlossen sind.

5. Einlaßsystem nach mindestens einem der Ansprüche 1 bis 4,
**dadurch gekennzeichnet, daß**
das stromabwärtige Ende des Einlaßkanals (1) als eine Kammer (3) ausgebildet ist, welche den Schaft des Ventils (2) ringförmig umgibt, wobei der Einlaßkanal (1) in der Ebene des Schafts gesehen am Eingang in die Kammer (3) einen Knick (6) aufweist.

6. Einlaßsystem nach Anspruch 5,
**dadurch gekennzeichnet, daß**
der Steuerkanal (4) im Bereich des Knicks (6) in die Kammer (3) mündet.

7. Einlaßsystem nach mindestens einem der Ansprüche 1 bis 6,
**dadurch gekennzeichnet, daß**
das stromabwärtige Ende des Einlaßkanals (11) als eine Kammer (13) ausgebildet ist, welche den Stößel des Ventils (12) ringförmig umgibt, wobei der Einlaßkanal (11) in einer Ebene senkrecht zum Stößel gesehen schräg in die Kammer (13) mündet.

8. Einlaßsystem nach Anspruch 7,
**dadurch gekennzeichnet, daß**
der Steuerkanal (14) in der Nähe der Spitze (16) mündet, die der Einlaßkanals (11) mit der Kammer (13) bildet.

9. Einlaßsystem nach mindestens einem der Ansprüche 1 bis 8,
**dadurch gekennzeichnet, daß**
der Einlaßkanal (11) so ausgebildet ist, daß er eine Rotation der Verbrennungsluft um die Längsachse des Einlaßkanals (11) erzeugt.

10. Verfahren zur Steuerung der Gemischbildung im Zylinder einer Brennkraftmaschine durch Beeinflussung des Strömungsverhaltens der dem Zylinder zugeführten Verbrennungsluft,
**dadurch gekennzeichnet, daß**
vor Eintritt der Verbrennungsluft in den Zylinder eine Steuerungsströmung in die Verbrennungsluft eingeleitet wird.
